# EUROPEAN PATENT SPECIFICATION

(11) **EP 1 885 635 B1**
(45) Date of publication and mention of the grant of the patent: **21.09.2011**
(21) Application number: 06727087.6
(22) Date of filing: 11.05.2006
(51) Int. Cl.: B65G 53/52, F23K 3/02, F23D 1/02, F15D 1/00, B01F 5/06

(54) **FLOW DISTRIBUTOR**
STRÖMUNGSVERTEILER
REPARTITEUR D'ECOULEMENT

(30) Priority: 11.05.2005 GB 0509554
(43) Date of publication of application: 13.02.2008
(73) Proprietor: Gaim Ltd, Derbyshire DE11 7GT (GB)
(72) Inventor: AROUSSI, Abdelwahab, Nottingham NG7 4BE (GB)
(74) Representative: Charig, Raymond Julian
(86) International application number: PCT/GB2006/001738
(87) International publication number: WO 2006/120457

(56) References cited:
- EP-A- 0 608 902
- WO-A-2004/022462
- WO-A1-00/76891
- WO-A1-00/76891
- DE-C1- 19 918 233
- DE-U1-202004 013 575
- US-A- 3 425 749
- US-A- 3 827 461
- US-A- 4 594 005
- US-A1- 2004 134 557

## Description

The present invention relates to a flow distributor for in particular, but not exclusively, two-phase particulate laden fluid flows.

Pipe networks are used in many different industries as a means for transporting and distributing particulate material conveyed by a carrier fluid throughout the network. Typical examples are found in the power generation industry, the chemical industry, the cement industry and the food industry.

Since the networks in many of these applications have pipelines expending along long and tortuous pathways, the particulate material often becomes less diffused within the carrier fluid in which it is carried such that the particulate material becomes concentrated within a region of the pipeline. This leads to a non-homogeneous mix of particulate material throughout the carrier fluid. This can lead to problems such as erosion or maldistribution at splits; namely where a pipeline branches in order to direct the fluid flow to two or more different outlets since, if the particulate material is not distributed uniformly throughout the carrier fluid, the particulate material will not be divided equally between the outlets.

In coal-fired power stations, for example, coal is pulverised in coal mills and then pneumatically transported and distributed to burners in a boiler. One coal mill typically supplies 4 to 8 burners with pulverised fuel. The burners are distributed in rows on one face of the boiler or on all the corners of the boiler. This means that the network of pipelines connecting the coal mill to the burners includes bends and elbows of various shapes, and splitters, in order to distribute pulverised fuel to each burner.

The length of the pipelines in the network, together with the tortuous path that they follow, modifies the nature of the pulverised fuel flow dramatically. In particular, the centrifugal forces acting on the particulate matter at bends in the network gives rise to an effect known as roping where the pulverised fuel becomes concentrated within a region of the pipeline, taking up only a small proportion of the pipeline cross-sectional area. The two-phase flow (air/coal) therefore changes from a relatively homogeneous flow starting from the coal mill to a roping flow after travelling through a relatively small number of bends in the pipeline.

On arriving at branching or splitting points in the network (e.g. bifurcations, trifurcations, quadrafurcations and so on) the non-homogeneous pulverised fuel flow is split into uneven fuel/air ratios to feed different burners.

Splitting the fuel from a primary pulverised fuel pipe to subsequent pipelines, often using a series of splits, with a mass split of, say, 60%:40% for a bifurcation, can have a significant effect on the boiler performance and power station efficiency.

The combustion control of the boiler often does not know the amount of pulverised fuel supplied to each individual burner, and it is sometimes difficult to accurately proportion, between the burners, the common air supply. The local effect at the burners therefore is an incorrect mixture of pulverised fuel and air.

This yields uneven combustion in the burners and an imbalance in the boiler combustion, particularly for wall-fired boilers. In turn, this increases fuel costs and levels of carbon in the ash, as well as the emission of pollutants in the flue gas such as nitrogen oxide, which is particularly problematic since there are increasingly stringent regulations for pollutant emissions.

One method of combating the problem of non-homogeneous flow in networks of pipelines is for each burner to have its own coal mill or to have a direct and controlled feed from a common mill. However, established industrial plants, such as power stations, usually have an established fuel conveying system. Provision of individual coal mills or direct feeds from a common mill would require the total redesign and replacement of the fuel conveying system at a considerable cost.

Another way of producing a more uniform distribution of particulate material within a carrier fluid is to install a conventional venturi into the pipeline. A venturi includes respective contraction and expansion portions which contract and expand the flow, This moves particles of the particulate material towards a central region of the pipeline so as to create more uniform distribution of particulate material within the carrier fluid.

However, the cross-sectional area of the venturi varies along the length thereof. This results in a large pressure drop in the carrier fluid. This is undesirable because it reduces the overall efficiency of the conveying system.

In addition, the venturi tends to force the particles towards the central region in a violent manner, thereby causing the particles to collide with one another making them difficult to control.

Each of US 3,425,749, US 2004/134557, US 4,594,005, and EP 0 608 902 discloses a flow distributor including a deflector section having an inner surface to urge the particles towards a central region of the distributor. US 3,425,749 discloses a flow distributor corresponding to the peamble of claim 1.

An aim of the present invention is to produce a more uniform distribution of particulate material within a carrier fluid without causing a substantial pressure drop in the carrier fluid.

According to the invention there is provided a flow distributor, for insertion in a pipeline conveying a particulate material carried by a carrier fluid, comprising a pipe including at least one deflector section having an inlet end, an outlet end, and being shaped so as to define a first continuous hollow conduit, the cross-sectional shape of the first hollow conduit varying along the length of the hollow conduit so as to maintain a constant cross-sectional area along the length of the first hollow conduit, the first hollow conduit having an active inner surface, in use, angled relative to the pipeline so as to urge particles of the particulate material towards a central region of the flow distributor, the active inner surface having a constant gradient in a longitudinal direction of the flow distributor, the flow distributor being characterised in that the active inner surface defines a convex inner wall of the first hollow conduit.

The urging of particles of the particulate material towards a central region of the flow distributor results in the particles being more uniformly distributed within the carrier fluid, thereby allowing a more accurate distribution of a multi-phase flow at, e.g. a downstream split.

In addition, the urging of the particles toward the central region imparts the particles with so-called "air suspension". This makes the particles easier to manage.

Furthermore, shaping the or each deflector section so as to define a first continuous hollow conduit having a substantially constant cross-sectional area results in minimal obstruction of the carrier fluid, thereby minimising the pressure drop across the flow distributor.

The inclusion of an active inner surface which has a constant gradient in a longitudinal direction of the flow distributor results in a flow distributor that is relatively easy to manufacture while still providing the aforementioned advantages, while the convex inner wall acts to spread the particles over the active surface, thereby further enhancing the creation of a uniform distribution of particulate material.

Preferably the or each deflector section includes a return section fluidly connected to the outlet end thereof, the or each return section being shaped so as to define a second hollow conduit having a cross-sectional area along the length thereof that is substantially equal to that of the first hollow conduit.

The return section defining a second hollow conduit having a cross-sectional area which is equal to that of the first hollow conduit further helps to minimise the pressure drop across the flow distributor.

Conveniently the flow distributor includes first and second deflector and return section pairs fluidly connected in series. Such an arrangement enhances the overall degree to which the particulate material is uniformly distributed within the carrier fluid.

Preferably the flow distributor further includes a third deflector and return section pair fluidly connected in series to one of the first or second deflector and return section pairs. This arrangement enhances still further the degree to which the particulate material is uniformly distributed.

In a further preferred embodiment of the invention the hollow conduit defined by the or each return section is a mirror image of the hollow conduit defined by the deflector section to which it is fluidly connected. This arrangement reduces the likelihood of the return section creating undesirable recirculation eddies.

Conveniently the or each active surface includes one or more guide vanes protruding therefrom. The or each guide vane helps to guide and spread the particles, thereby further helping to create a uniform distribution of particulate material.

In another embodiment of the invention the flow distributor includes a rotatable flange at either end thereof for allowing the flow distributor to rotate relative to the pipeline while permitting the pipeline to continue conveying the particulate material. The ability to rotate the flow distributor relative to the pipeline allows for the optimization of the orientation of the flow distributor in order to more uniformly distribute the particles within the carrier fluid.

Optionally the flow distributor includes a flow control system. The inclusion of a flow control system helps to fine-tune and/or encourage the distribution of particulate material within the pipeline.

Preferably the flow control system includes at least one of a flow gate or one or more pipe inserts.

In a preferred embodiment of the invention the or each pipe insert includes:
(i) a vortex generator;
(ii) a spiralling vane;
(iii) a cruciform;
(iv) a flow straightener,
(v) a gas injector; or
(vi) a flow bleeding port.

The foregoing features allow for practical fine-tuning and/or encouraging of the distribution of particulate material within the pipeline.

There now follows a brief description of preferred embodiments of the invention, by way of non-limiting examples, with reference to the accompanying drawings in which:

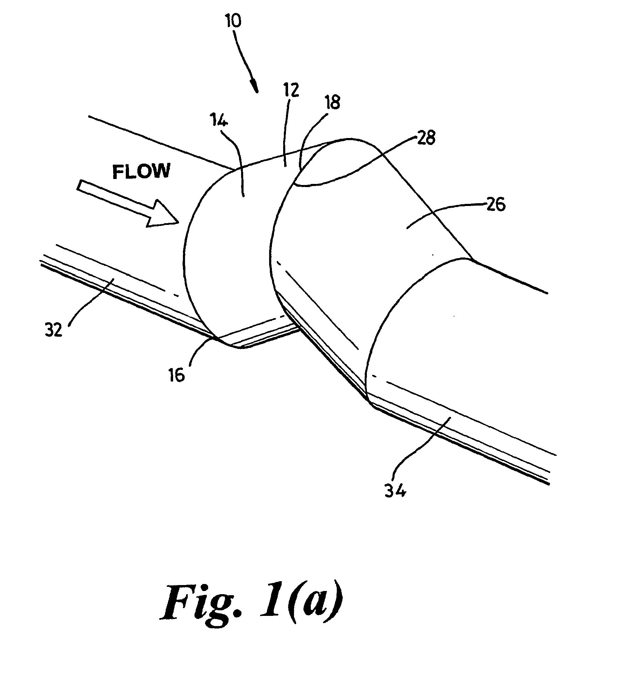

Figure 1 (a) shows a perspective view of a flow distributor;

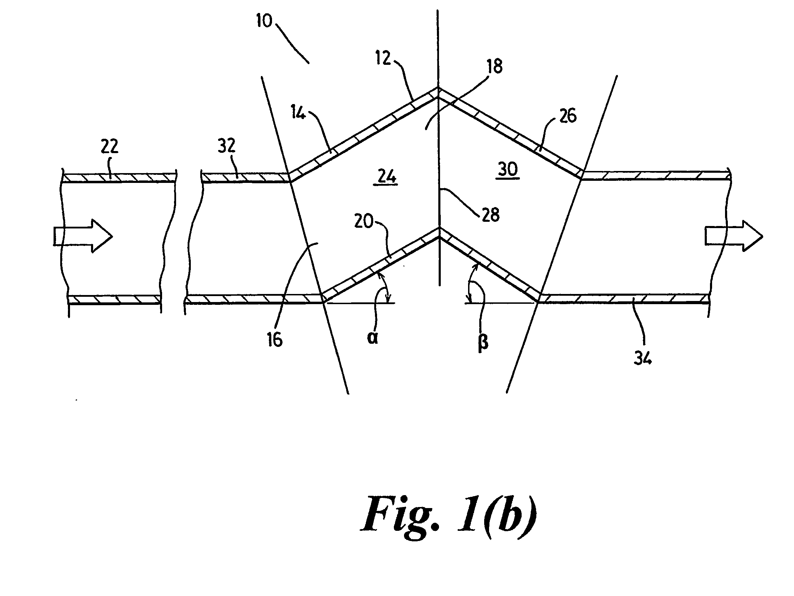

Figure 1(b) shows a cross sectional view of the flow distributor shown in Figure 1(a);
Figure 2 shows an elevational view from one end of the flow distributor shown in Figure 1;
Figures 3(a) and 3(b) show a schematic, perspective view of an additional flow distributors;
Figure 4 shows an elevational view from one end of the flow distributor shown in Figure 3(b);
Figure 5 shows an elevational view from one end of another flow distributor;
Figure 6 shows a schematic view of a still further flow distributor;
Figure 7 shows a schematic view of a further flow distributor;

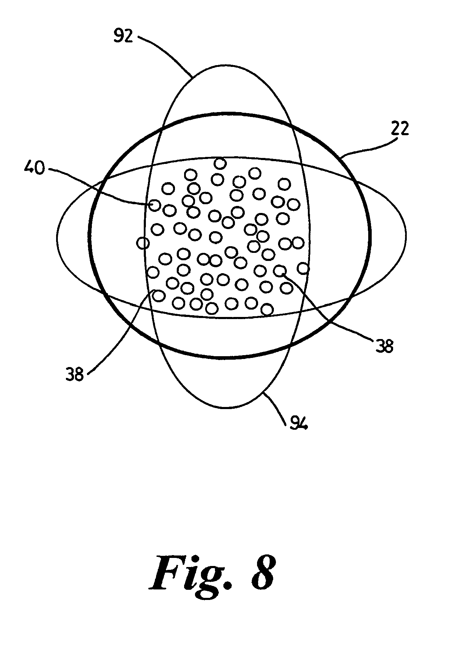

Figure 8 shows an elevational view from one end of the flow distributor shown in Figure 7;
Figure 9 shows a schematic view of a flow distributor according to a first embodiment of the invention;
Figure 10 shows a schematic view of a part of a flow distributor according to a second embodiment of the invention;
Figure 11(a) shows a first flow gate for inclusion in a flow distributor according to the invention;
Figure 11(b) shows a second flow gate for inclusion in a flow distributor according to the invention;
Figure 12 shows a first pipe insert for inclusion in a flow distributor according to the invention; and
Figure 13 shows a second pipe insert for inclusion in a flow distributor according to the invention.

A first flow distributor is designated generally by the reference numeral 10.

The flow distributor 10 comprises a pipe 12 having at least one deflector section 14. The deflector section 14 has an inlet end 16 and an outlet end 18. The deflector section 14 further includes an active inner surface 20 which is angled relative to the pipeline 22. In the embodiment shown, the angle a subtended between the active surface 20 and the pipeline 22 is 30° In other arrangements the subtended angle may vary between 1° and 30°. In especially preferred arrangements the subtended angle is in the range 10° to 15°.

The active inner surface 20 has a constant gradient in a longitudinal direction of the flow distributor 10. In other words, the cross-sectional shape of the active inner surface 20 when sectioned along the longitudinal length of the flow distributor 14 is essentially straight

In the arragement shown the deflector section 14 has a generally circular cross-sectional shape which corresponds to the shape of the pipeline 22. In other arrangements different cross-sectional shapes are also possible.

The cross-sectional shape of the deflector section 14 is constant along the length thereof. As a result the deflector section 14 defines a hollow continuous conduit 24 which has a substantially constant cross-sectional area along the length thereof. The hollow conduit 24 is continuous in the sense that it is uninterrupted by holes and/or other inlets.

The distributor section 14 also includes a return section 26 which is fluidly connected to the outlet end 18 of the deflector section 14. In the arrangement shown the return section 26 is a mirror image of the distributor section 14. Consequently the return section 26 is shaped so as to define a second continuous hollow conduit 30, identical to the first hollow conduit 24, which has a substantially constant cross-sectional area along the length thereof.

In other arrangements the angle β subtended between the return section 26 and the pipeline 22 may differ from that subtended between the deflection section 14 and the pipeline 22. Preferably the angle β between the return section 26 and the pipeline 22 is less than or equal to 60°. An angle β greater than 60° tends to generate recirculation eddies adjacent to an interface 28 between the deflector and return sections 14, 26.

In the arrangement shown distributor 10 also includes first and second pipe connection sections 32, 34. The pipe connection sections 32, 34 are arranged so as to share a common axis, thereby facilitating installation of the flow distributor 10 into an existing pipeline 22.

In use, the flow distributor 10 is inserted into a pipeline 22 transporting and distributing a particulate material in a carrier fluid, typically a gas such as air. Preferably, the flow distributor 10 is inserted into a pipeline 22 immediately upstream of a split (not shown), e.g. a bifurcation, a trifurcation, or a quadrafurcation, in the pipeline 22. In this way the flow distributor 10 produces a more uniform distribution, of particulate material within the carrier fluid, immediately upstream of the split.

On entry into the deflector section 14 the active surface 20 deflects particles 40 of the particulate material 36. On passing the interface 28 between deflector and return section 14,26, the particles lie in a diffuse cloud at a central region 38 of the flow distributor 10. In this way the active surface 20 urges the particles 40 towards a central region 38 of the flow distributor 10 which results in the particles 40 being more uniformly distributed within the carrier fluid.

The return section 14 provides a conduit for the particles 40 to continue along the Pipeline 22.

The choice of deflector section 14 length and angle α between the deflector section 14 and the pipeline 22 is linked to the physical constraints of a given installation environment.

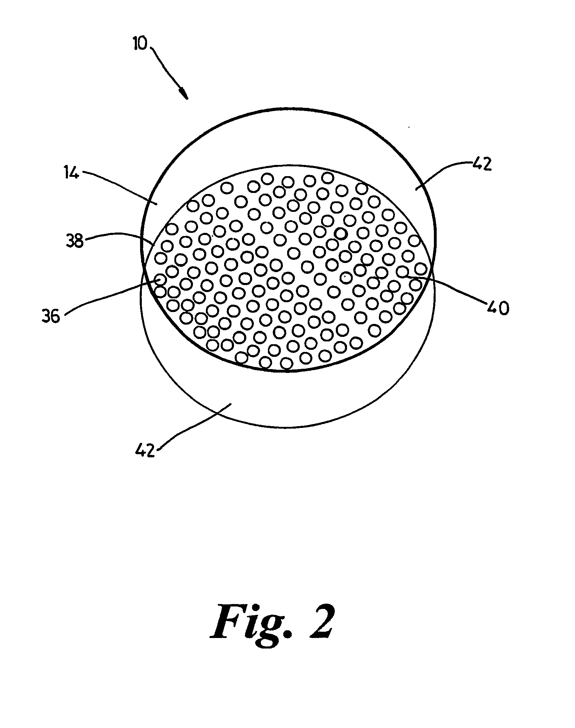

The active surface 20 impedes the flow of particulate material 36 in the form of a crescent-shaped obstruction 42, as shown in Figure 2.

The size of the obstruction 42 is directly proportional to the angle α between the deflector section 14 and the pipeline 22.

Increasing the angle α creates a greater obstacle which, in turn, increases the pressure drop across the deflector section 14 for a given distribution effect.

However, the pressure drop across the deflector section 14 does not increase in proportion with the increase in angle α. This is because the cross-sectional area of the first hollow conduit 24 remains substantially constant along the length of the deflector section 14. As a result the change in pressure created by the deflector section 14 is minimal, thereby ensuring that any fall in carrier fluid pressure overall is minimised.

The return section 26 is a mirror image of the deflector section 14 and therefore also minimises any drop in carrier fluid pressure.

On the other hand, reducing the angle α, while minimising still further the pressure drop, results in a longer deflector section 14 for a given distribution effect Increasing the length of the deflector section 14 increases material, and production costs. In addition a longer deflector section 14 may be unsuitable for a given installation location.

The flow approaching a pipe split may contain a plurality of ropes because of the prevailing flow regime or the characteristics of the particulate material. In addition a rope may be highly swirling.

A second flow distributor 50 is well-suited to such situations.

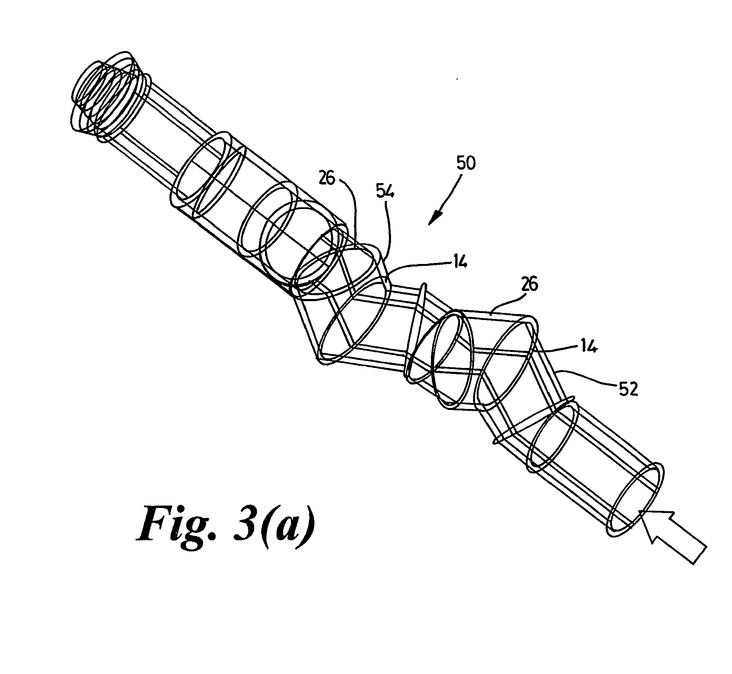

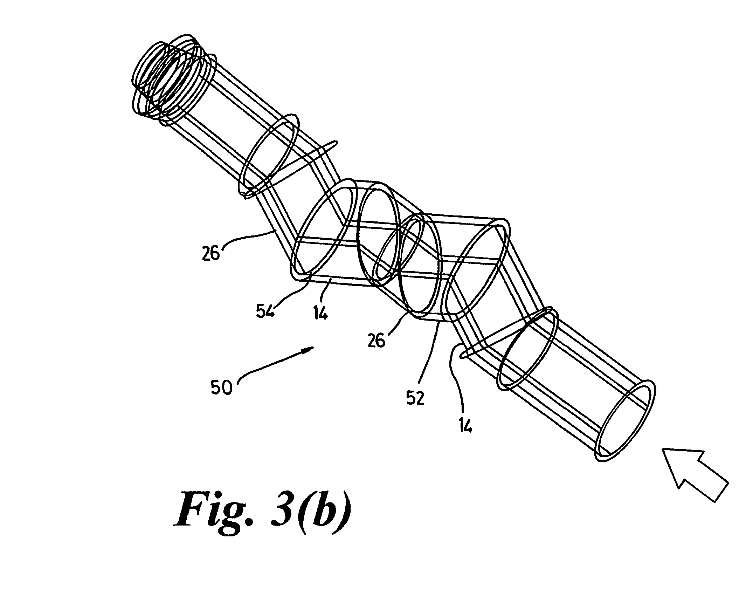

The second flow distributor 50 includes first and second 52, 54 deflector and return section 14, 26 pairs, as shown in Figures 3(a) and 3(b). The pairs 52, 54 are fluidly connected in series.

Each of the deflector and return sections 14, 26 has the same circular cross-sectional shape as those element in the first flow distributor 10.

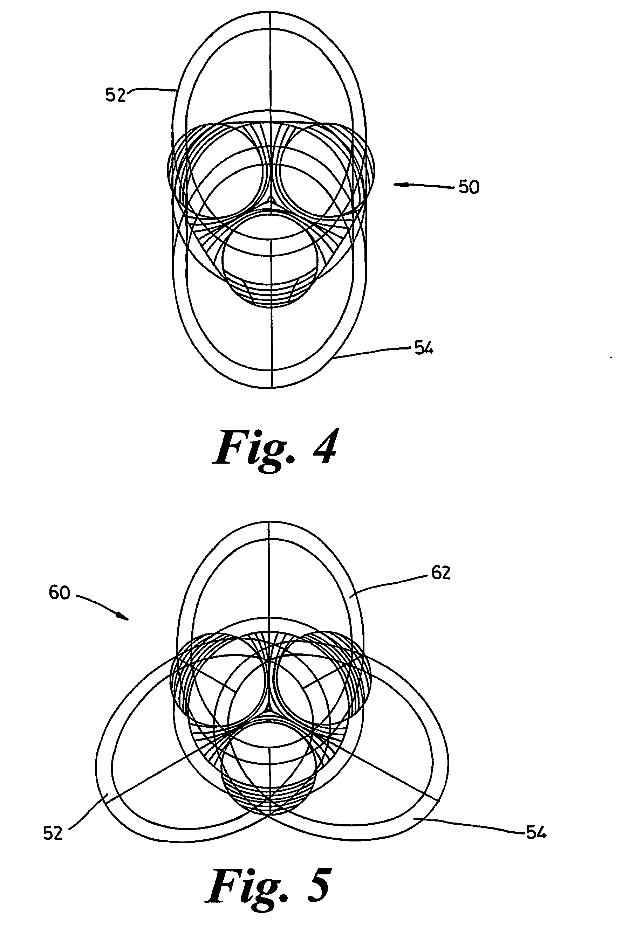

The first and second pairs 52, 54 may protrude in opposite directions within the same plane, as shown in Figures 3(b) and 4. Alternatively the first and second pairs 52, 54 may lie in planes perpendicular to one another, as shown in Figure 3(a).

In use, the effect of each pair 52, 54 of deflector and return sections 14, 26 is the same as that outlined in connection with the first embodiment of the invention. The pairs 52, 54 combine to further uniformly distribute the particulate material 3 6 within the carrier fluid.

A third flow distributor, designated generally by the reference numeral 60, comprises first, second and third 52, 54, 62 deflector and return section 14, 26 pairs fluidly connected in series. Each of the deflector and return sections 14, 26 has the same circular cross-sectional shape as those elements in the first flow distributor 10.

Each pair 52,54, 62 protrudes in a plane inclined at an angle of 120° to each of the other planes in which a pair 52, 54, 62 protrudes, as shown in Figure 5.

Each pair of deflector and return sections 14, 26 distributes the particulate material 36 within the carrier fluid in the same way as outlined above.

A further preferred arrangement (not shown in the drawings) includes four pairs of deflector and return sections 14, 26, each having the same circular cross-sectional shape as deflector and return sections 14, 26 in the first flow distributor 10.

Adjacent pairs may protrude in opposite directions within the same plane, or adjacent pairs may lie in planes perpendicular to one another.

A fourth flow distributor 70 includes a second deflector section 72 in which the inlet end 74 has a circular cross-sectional shape and the outlet end 76 has an oval cross-sectional shaped. The cross-sectional area of each of the inlet and outlet ends 74, 76 is substantially the same, the transition therebetween being essentially uniform so as to define a third hollow conduit 78 having a substantially constant cross-sectional area along the length thereof.

The inlet and outlet ends 74, 76 share a common axis. As a result the third hollow conduit 78 creates a pair of opposed active inner surfaces 80 that have a constant gradient in the longitudinal direction of the flow distributor 70 and are angled relative to the pipeline by an angle α.

The fourth flow distributor 70 includes a second return section 82 that is a mirror image of the second deflector section 72.

In use the opposed active inner surfaces 80 of the fourth flow distributor 70 defect particles 40 of particulate material 36, thereby causing them to lie in a diffuse cloud at a central region 38 of the flow distributor 70. This results in the particles 40 being more uniformly distributed within the carrier fluid.

The distributing effect of the fourth flow distributor 70 is approximately equal to that of the second flow distributor 50 which includes two pairs 52, 54 of deflector and return sections 14, 16.

The pressure drop across the fourth flow distributor 70 is minimised since the cross-sectional area remains substantially constant along the length thereof.

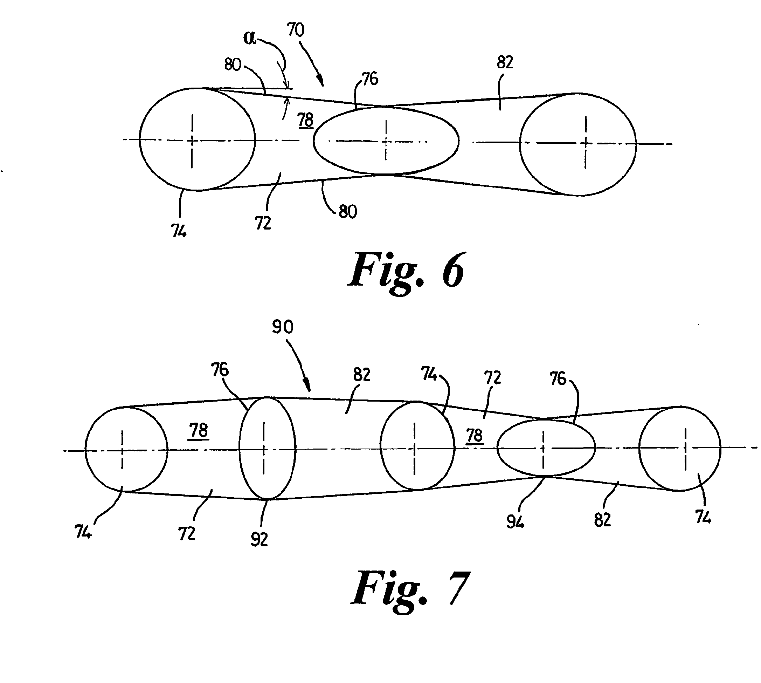

A fifth flow distributor (shown in Figure 7) is designated generally by the reference numeral 90.

The fifth flow distributor 90 includes third and fourth 92, 94 second deflector and return section 72, 82 pairs that are fluidly connected in series.

In the arrangement shown, the oval-shaped outlet end 76 of each deflector section 72 is rotated by 90° relative to the other.

In use, each pair 92, 94 of second deflector and return sections 72, 82 operates in the same manner as that outlined in connection with the fourth flow distributor 70. The pairs combine to further uniformly distribute the particulate material within the carrier fluid, as shown in Figure, 8. The distributing effect of the fifth flow distributor 90 is approximately equal to that of two second flow distributors 50.

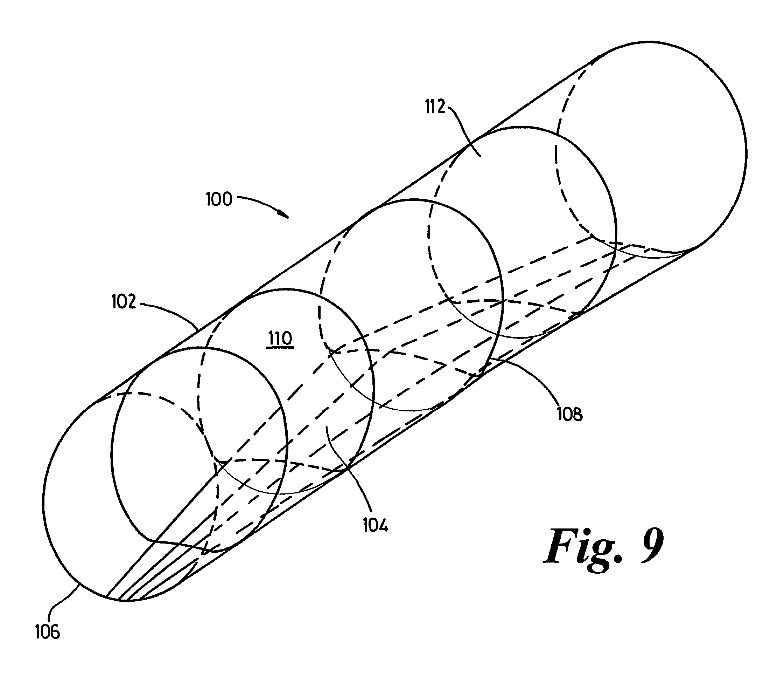

Figure 9 shows a flow distributor 100 according to a first embodiment of the invention.

This flow distributor 100 includes a third deflector section 102 which has a third active inner surface 104 which is angled relative to a pipeline (not shown in the drawings). The third active inner surface 104 has a constant gradient in the longitudinal direction of the flow distributor 100, but a convex cross-sectional profile. The width of the third active inner surface 104 increases from an inlet end 106 of the third deflector section 102 to an outlet end 108 thereof.

The third deflector section 102 is shaped so as to define a fourth hollow conduit 110 which has a substantially constant cross-sectional area along the length thereof (not shown in the drawings).

The flow distributor 100 includes a third return section 112 that is a mirror image of the third deflector section 102. In other embodiments of the invention different arrangements and numbers of third deflector 102 and third return sections 112 are also possible.

In use, the third active inner surface 104 urges particles of the particulate material towards a central region of the sixth flow distributor 100. In addition, the cross-sectional profile acts to spread the particles over the third active inner surface 104, thereby further enhancing the creation of a uniform distribution of particulate material.

Maintaining a uniform cross-sectional area along the length of the sixth flow distributor 100 minimises the pressure drop thereacross.

A flow distributor 120 according to another embodiment of the invention shares common features with the sixth flow distributor 100. Identical reference numerals are used for these common features.

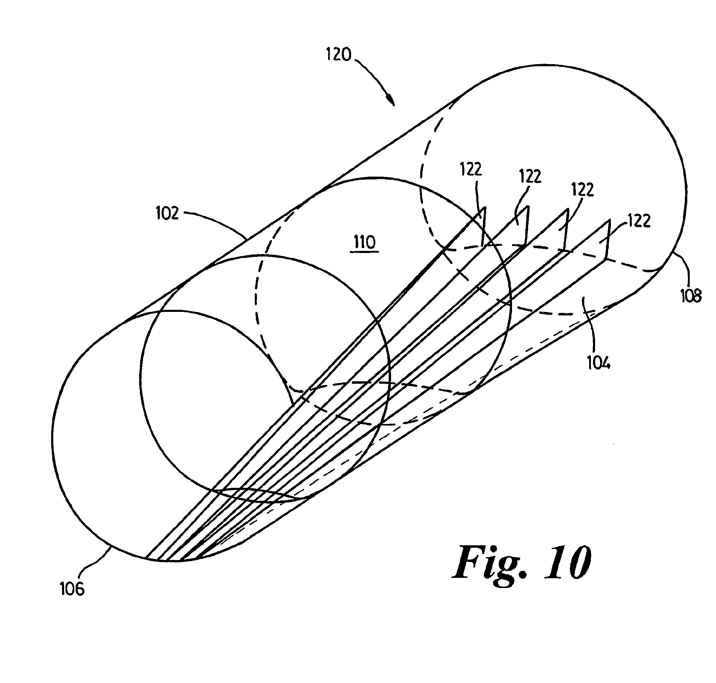

Figure 10 shows the third deflector section 102 of the seventh flow distributor 120. The seventh flow distributor 120 also includes a third return section 112 (not shown) which defines a fifth hollow conduit that is a mirror image of the fourth hollow conduit 110 defined by the third deflector section 102.

In addition, the third deflector section 102 includes four guide vanes 122 protruding from the third active inner surface 104 thereof. In other embodiments of the invention different numbers of guide vanes are also possible.

Furthermore, the guide vanes 122 may also be included in the other deflector sections 14, 72 mentioned above.

In use the guide vanes 120 help to guide and spread the particles along the third active inner surface 104, thereby further helping to create a uniform distribution of particulate material.

Any of flow distributors 10, 50, 60, 70, 90, 100, 120 mentioned above may include a rotatable flange at either end thereof One example of a suitable rotatable flange is an air-purged flange. The inclusion of a rotatable flange allows an operator to rotate the flow distributor 10, 50, 60, 70, 90, 100, 120 relative to the pipeline 22 so as to have a desired rotational orientation relative thereto without having to remove the flow distributor 10, 50, 60, 70, 90, 100, 120 from the pipeline 22. In this way optimization of the distribution of particulate material is able to take place without interrupting the flow of particulate material within the pipeline.

The aforementioned flow distributors 10, 50, 60, 70, 90, 100, 120 may also include a first flow gate 130 in fluid connection therewith.

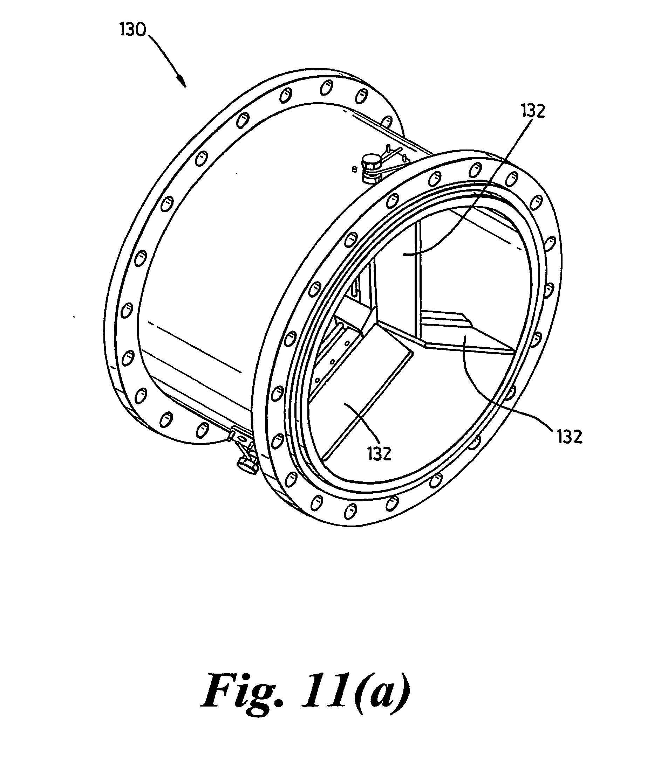

The first flow gate 130 includes a plurality of movable vanes 132. In the embodiment shown in Figure 11(a), the first flow gate 130 includes three, planar, vanes 132 spaced from one another by 120°, Each vane 132 is movable so as to fine-tune the particulate material distribution within the pipe 12 by urging the particulate material in a direction perpendicular to the plane of the vane 132.

The first flow gate 130 shown, having three movable vanes 132, is used upstream of a trifurcation.

In other arrangements the first flow gate 130 may have similar geometry to that of, e.g. a bifurcation or a quadfurcation. For example, a flow gate for use with a bifurcation may include a single vane arranged parallel to the bifurcation split A flow gate for use with a quadfurcation may include four vanes spaced by 90° from one another.

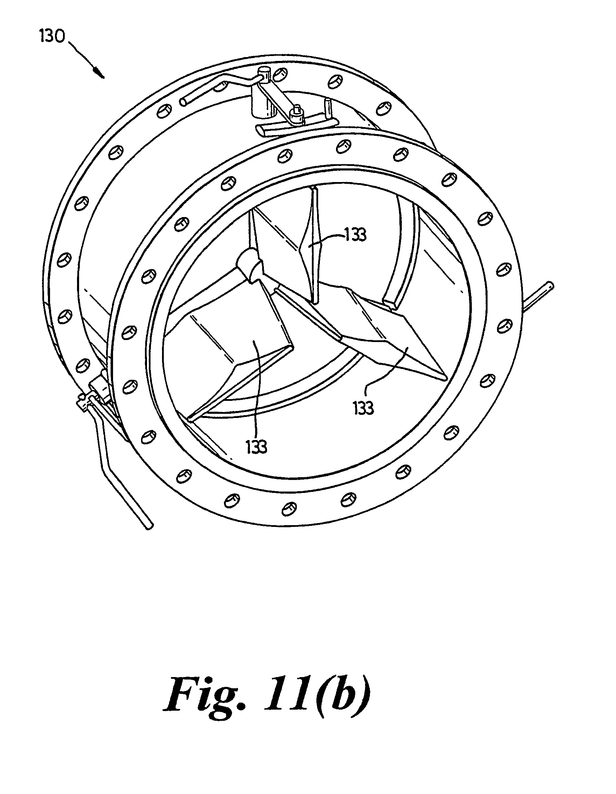

A second flow gate 130, as shown in Figure 11(b), includes three, profiled, movable vanes 133 spaced from one another by 120°. The sides of each vane 133 are shaped so as to define a desired profile. The vanes 133 are movable so as to fine-tune the particulate material distribution within the pipe 12 by urging the particulate material in both a perpendicular and parallel direction relative to the plane of the vane 133, thereby allowing even greater optimization of the distribution of particles within the carrier fluid.

The arrangement of the second flow gate 130 may include any of the various configurations discussed in connection with the first flow gate 130.

A flow distributor 10, 50, 60, 70, 90,100,120 may also include one or more pipe inserts.

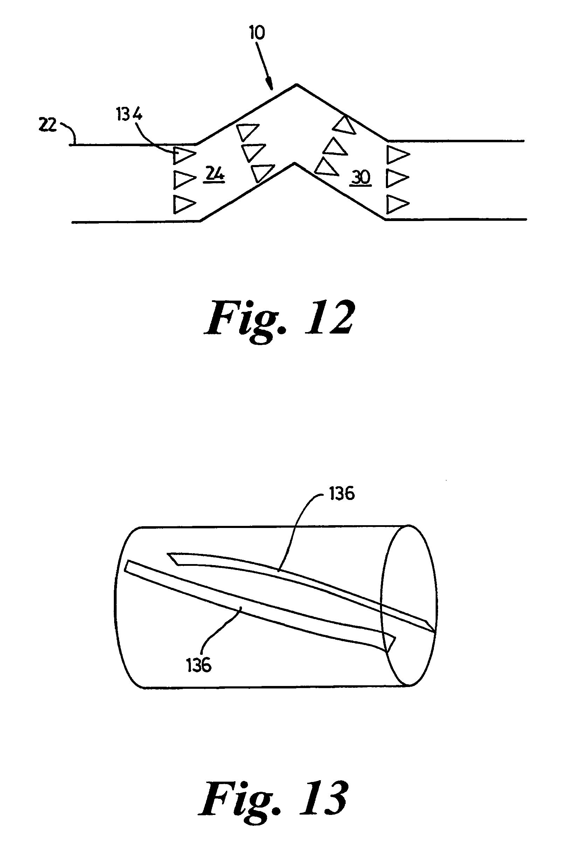

One type of pipe insert is a vortex generator 134. Figure 12 shows a flow distributor 10 including a plurality of vortex generators 134 within the first and second hollow conduits 24, 30 thereof

In use the vortex generators 134 alter the swirl of the carrier fluid and promote mixing of the particulate material therewith. In this way the vortex generators 134 enhance the uniform distribution of the particulate material within the canier fluid.

Another insert includes a spiralling vane 136, as shown in Figure 13. Each spiraling vane 136 helps to enhance the uniform distribution of the particulate material within the carrier fluid.

Further possible inserts include a cruciform, a flow straightener, a gas injector and a flow bleeding port.

Each insert may be positioned anywhere in the respective hollow conduits of the flow distributor 10, 50, 60, 70, 90, 100, 120.

Each insert helps to control the degree of deviation and break up of a rope along with the uniform distribution of the particulate material within the carrier fluid.

## Claims

1. A flow distributor (100; 120), for insertion in a pipeline (22) conveying a particulate material (36) carried by a carrier fluid, comprising a pipe (12) including at least one deflector section (102) having an inlet end (106), an outlet end (108), and being shaped so as to define a first continuous hollow conduit (110), the cross-sectional shape of the first hollow conduit (110) varying along the length of the first hollow conduit (110) so as to maintain a constant cross-sectional area along the length of the first hollow conduit (110), the first hollow conduit (110) having an active inner surface (104), in use, angled relative to the pipeline (22) so as to urge particles (40) of the particulate material (36) towards a central region (38) of the flow distributor (100; 120), the active inner surface (104) having a constant gradient in a longitudinal direction of the flow distributor (100; 120), the flow distributor (100; 120) being **characterised in that** the active inner surface (104) defines a convex inner wall of the first hollow conduit.

2. A flow distributor (100; 120) according to Claim 1 wherein the or each deflector section (102) includes a return section (112) fluidly connected to the outlet end (108) thereof, the or each return section (112) being shaped so as to define a second hollow conduit (30) having a cross-sectional area along the length thereof that is substantially equal to that of the first hollow conduit (110).

3. A flow distributor (100; 120) according to Claim 2 including first and second deflector and return section (102; 112) pairs fluidly connected in series.

4. A flow distributor (100; 120) according to Claim 3 further including a third deflector and return section pair fluidly connected in series to one of the first or second deflector and return section pairs.

5. A flow distributor (100; 120) according to any of Claims 2 to 4 wherein the hollow conduit defined by the or each return section (112) is a mirror image of the hollow conduit (110) defined by the deflector section to which it is fluidly connected.

6. A flow distributor (100; 120) according to any preceding claim wherein the or each active surface (104) includes one or more guide vanes (122) protruding therefrom.

7. A flow distributor (100; 120) according to any preceding claim including a rotatable flange at either end thereof for allowing the flow distributor to rotate relative to the pipeline while permitting the pipeline to continue conveying the particulate material.

8. A flow distributor (100; 120) according to any preceding claim including a flow control system.

9. A flow distributor according to Claim 8 wherein the flow control system includes at least one of a flow gate (130) or one or more pipe inserts.

10. A flow distributor according to Claim 9 wherein the or each pipe insert includes:
(i) a vortex generator (134);
(ii) a spiralling vane (136);
(iii) a cruciform;
(iv) a flow straightener;
(v) a gas injector; or
(vi) a flow bleeding port.

## Patentansprüche

1. Strömungsverteiler (100; 120), der zum Einsetzen in eine Pipeline oder Leitung (im Folgenden "Pipeline") (22) zur Förderung eines von einem Trägerfluid getragenen teilchenförmigen Materials (36), Schwebstoffen, Feststoffen oder Aerosolen bestimmt ist, mit einem Rohr (12), welches zumindest einen Ablenkabschnitt (102) besitzt und ein Einlass-Ende (106) und ein Auslass-Ende (108) aufweist und geformt ist zur Vorgabe oder Begrenzung einer ersten kontinuierlichen hohlen Leitung (110), wobei die Querschnittsform der ersten hohlen Leitung (110) entlang der Längserstreckung der ersten hohlen Leitung (110) variiert unter Beibehaltung einer konstanten Querschnittsfläche entlang der Längserstreckung der ersten hohlen Leitung (110), wobei die erste hohle Leitung (110) eine aktive innere Fläche (104) besitzt, die im Betrieb relativ zu der Pipeline (22) abgewinkelt ist, um Teilchen (40) des teilchenförmigen Materials (36) in Richtung eines zentralen Bereichs (38) des Strömungsverteilers (100; 120) zu zwingen, wobei die aktive innere Fläche (104) einen konstanten Gradienten in eine Längsrichtung des Strömungsverteilers (100; 120) besitzt, **dadurch gekennzeichnet, dass** die aktive innere Fläche (104) eine innere Wandung der ersten hohlen Leitung definiert, begrenzt oder bildet.

2. Strömungsverteiler (100; 120) nach Anspruch 1, **dadurch gekennzeichnet, dass** der oder jeder Ablenkabschnitt (102) einen Rückkehrabschnitt (112) besitzt, der fluidisch mit dem Auslass-Ende (108) verbunden ist, wobei der oder jeder Rückkehrabschnitt (112) geeignet geformt ist zur Vorgabe, Definition oder Begrenzung einer zweiten hohlen Leitung (30), die entlang der Längserstreckung eine Querschnittsfläche besitzt, die substantiell gleich der Querschnittsfläche der ersten hohlen Leitung (110) ist.

3. Strömungsverteiler (100; 120) nach Anspruch 2 mit Paaren mit erstem Ablenker, zweitem Ablenker und Rückkehrabschnitt (102; 112), die fluidisch in Reihe verbunden sind.

4. Strömungsverteiler (100; 120) nach Anspruch 3 mit einem dritten Paar mit einem Ablenker und einem Rückkehrabschnitt, welches mit den Paaren mit erstem Ablenker, zweitem Ablenker und Rückkehrabschnitt in Reihe fluidisch verbunden ist.

5. Strömungsverteiler (100; 120) nach einem der Ansprüche 2 bis 4, **dadurch gekennzeichnet, dass** die hohle Leitung, die zwischen dem oder jedem Rückkehrabschnitt (112) vorgegeben oder gebildet ist, eine gespiegelte Abbildung der hohlen Leitung (110) ist, die durch den Ablenkabschnitt vorgegeben oder gebildet ist und mit der diese fluidisch verbunden ist.

6. Strömungsverteiler (100; 120) nach einem der vorhergehenden Ansprüche, **dadurch gekennzeichnet, dass** die oder jede aktive Fläche (104) mindestens einen Führungsflügel (122) besitzt, der hiervon hervorsteht.

7. Strömungsverteiler (100; 120) nach einem der vorhergehenden Ansprüche mit einem verdrehbaren Flansch an einem Ende oder beiden Enden zur Ermöglichung einer Verdrehung des Strömungsverteilers relativ zu der Pipeline bei gleichzeitiger Ermöglichung der kontinuierlichen Förderung des teilchenförmigen Materials durch die Pipeline.

8. Strömungsverteiler (100; 120) nach einem der vorhergehenden Ansprüche mit einem Strömungssteuersystem oder Strömungsregelsystem.

9. Strömungsverteiler nach Anspruch 8, **dadurch gekennzeichnet, dass** das Strömungssteuersystem oder Strömungsregelsystem zumindest ein Strömungselement, Strömungstor oder -ventil (130) und/oder mindestens einen Rohreinsatz besitzt.

10. Strömungsverteiler nach Anspruch 9, **dadurch gekennzeichnet, dass** der oder jeder Rohreinsatz aufweist:
(i) einen Wirbelgenerator (134);
(ii) einen spiralförmigen Flügel (136);
(iii) ein kreuzförmiges Element oder eine Kreuzform;
(iv) einen Strömungsbegradiger oder -ausrichter;
(v) einen Gas-Injektor; oder
(vi) einen Entlüftungsanschluss oder Abzweiganschluss für die Strömung.

## Revendications

1. Répartiteur d'écoulement (100 ; 120), pour insertion dans une conduite (22) convoyant un matériau à particules (36) porté par un fluide porteur, comprenant un tuyau (12) incluant au moins une section de déflecteur (102) ayant une extrémité d'admission (106), une extrémité de refoulement (108), et étant formé de manière à définir un premier conduit creux continu (110), la forme en coupe du premier conduit creux (110) variant suivant la longueur du premier conduit creux (110) de manière à maintenir une aire en coupe constante suivant la longueur du premier conduit creux (110), le premier conduit creux (110) ayant une surface interne active (104), en utilisation, coudée par rapport à la conduite (22) de manière à pousser des particules (40) du matériau à particules (36) vers une région centrale (38) du répartiteur d'écoulement (100 ; 120), la surface interne active (104) ayant un gradient constant dans une direction longitudinale du répartiteur d'écoulement (100 ; 120), le répartiteur d'écoulement (100 ; 120) étant **caractérisé en ce que** la surface interne active (104) définit une paroi interne convexe du premier conduit creux.

2. Répartiteur d'écoulement (100 ; 120) selon la revendication 1, dans lequel la ou chaque section de déflecteur (102) inclut une section de retour (112) raccordée fluidiquement à son extrémité de refoulement (108), la ou chaque section de retour (112) étant formée de manière à définir un second conduit creux (30) ayant une aire en coupe suivant sa longueur qui est sensiblement égale à celle du premier conduit creux (110).

3. Répartiteur d'écoulement (110 ; 120) selon la revendication 2, incluant des première et deuxième paires de sections de déflecteur et de retour (102 ; 112) raccordées fluidiquement en série.

4. Répartiteur d'écoulement (110 ; 120) selon la revendication 3, incluant en outre une troisième paire de sections de déflecteur et de retour raccordées fluidiquement en série à l'une des première et deuxième paires de section de déflecteur et de retour.

5. Répartiteur d'écoulement (110 ; 120) selon l'une quelconque des revendications 2 à 4, dans lequel le conduit creux défini par la ou chaque section de retour (112) est une image miroir du conduit creux (110) défini par la section de déflecteur à laquelle il est raccordé fluidiquement.

6. Répartiteur d'écoulement (110 ; 120) selon l'une quelconque des revendications précédentes, dans lequel la ou chaque surface active (104) inclut une ou plusieurs aubes de guidage (122) faisant saillie à partir de celle-ci.

7. Répartiteur d'écoulement (110 ; 120) selon l'une quelconque des revendications précédentes, incluant une bride rotative à l'une ou l'autre de ses extrémités pour permettre au répartiteur d'écoulement de tourner par rapport à la conduite tout en permettant à la conduite de continuer à convoyer le matériau à particules.

8. Répartiteur d'écoulement (110 ; 120) selon l'une quelconque des revendications précédentes, incluant un système de commande d'écoulement.

9. Répartiteur d'écoulement selon la revendication 8, dans lequel le système de commande d'écoulement inclut au moins un élément parmi une vanne (130) et une ou plusieurs garnitures de tuyaux.

10. Répartiteur d'écoulement selon la revendication 9, dans lequel la ou chaque garniture de tuyaux inclut :
(i) un générateur de vortex (134) ;
(ii) une aube en spirale (136) ;
(iii) un cruciforme ;
(iv) un stabilisateur d'écoulement ;
(v) un injecteur de gaz ; ou
(vi) un orifice de purge d'écoulement.
